# EUROPEAN PATENT APPLICATION

(11) **EP 4 633 105 A1**
(43) Date of publication of application: **15.10.2025**
(21) Application number: 23912830.9
(22) Date of filing: 22.12.2023
(51) Int. Cl.: H04L 41/5003, H04L 41/0894, G06N 20/20, H04L 67/53, H04W 88/14

(54) **METHOD AND APPARATUS FOR SUPPORTING QOS IN WIRELESS COMMUNICATION SYSTEM**

(30) Priority: 26.12.2022 KR 20220184713
(71) Applicant: Samsung Electronics Co., Ltd., Suwon-si, Gyeonggi-do 16677 (KR)
(72) Inventor: SUH, Dongeun, Suwon-si Gyeonggi-do 16677 (KR); PARK, Jungshin, Suwon-si Gyeonggi-do 16677 (KR); KIM, Hyesung, Suwon-si Gyeonggi-do 16677 (KR)
(74) Representative: Gulde & Partner
(86) International application number: PCT/KR2023/021475
(87) International publication number: WO 2024/144155

(57) **Abstract**

The present disclosure relates to a 5G or 6G communication system for supporting a higher data transmission rate. A method performed by a network exposure function (NEF) entity in a wireless communication system, according to the present disclosure, may comprise the steps of: receiving, from an application function (AF) entity, a first message requesting negotiation of a planned data transfer with QoS (PDTQ) policy; on the basis of the first message, transmitting, to a policy control function (PCF) entity, a second message requesting a decision of the PDTQ policy; receiving, from the PCF entity, a third message including information related to at least one PDTQ policy determined by the PCF entity; and transmitting, to the AF entity, information related to the determined at least one PTDQ policy.

## Description

### [Technical Field]

Thet disclosure relates to a method and an apparatus for supporting QoS for a federated learning service in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure provides a method and an apparatus for supporting QoS in a wireless communication system and, specifically, proposes a method and an apparatus for allocating network resources in consideration of traffic for federated learning service in a wireless communication system.

### [Solution to Problem]

A method performed by a network exposure function (NEF) entity in a wireless communication system according to an embodiment proposed in the disclosure may include: receiving a first message requesting negotiation of a planned data transfer with QoS (PDTQ) policy from an application function (AF) entity; transmitting a second message requesting determination of the PDTQ policy, based on the first message, to a policy control function (PCF) entity; receiving a third message including information related to at least one PDTQ policy determined by the PCF entity from the PCF entity; and transmitting the information related to the at least one determined PDTQ policy to the AF entity.

A method performed by a policy control function (PCF) entity in a wireless communication system may include: receiving, from a network exposure function (NEF) entity, a first message requesting determination of a planned data transfer with QoS (PDTQ) policy according to a request of an application function (AF) entity; transmitting, to a unified data repository (UDR) entity, a second message requesting a pre-stored PDTQ policy and information for determining a PDTQ policy of the AF entity; receiving, from the UDR entity, a third message including the pre-stored PDTQ policy and information for determining a PDTQ policy of the AF entity; determining at least one PDTQ policy, based on the third message; and transmitting, to the NEF entity, a fourth message including at least one determined PDTQ policy and information related to the determined at least one PDTQ policy, wherein the PDTQ policy indicates at least one QoS policy which may be provided to a third party.

A network exposure function (NEF) entity in a wireless communication system may include at least one transceiver and a controller coupled to the at least one transceiver. The controller may be configured to: receive a first message requesting negotiation of a planned data transfer with QoS (PDTQ) policy from an application function (AF) entity; transmit a second message requesting determination of the PDTQ policy, based on the first message, to a policy control function (PCF) entity; receive a third message including information related to at least one PDTQ policy determined by the PCF entity from the PCF entity; and transmit the information related to the at least one determined PDTQ policy to the AF entity.

A policy control function (PCF) entity in a wireless communication system may include at least one transceiver and a controller coupled to the at least one transceiver. The controller may be configured to: receive, from a network exposure function (NEF) entity, a first message requesting determination of a planned data transfer with QoS (PDTQ) policy according to a request of an application function (AF) entity; transmit, to a unified data repository (UDR) entity, a second message requesting a pre-stored PDTQ policy and information for determining a PDTQ policy of the AF entity; receive, from the UDR entity, a third message including the pre-stored PDTQ policy and information for determining a PDTQ policy of the AF entity; determine at least one PDTQ policy, based on the third message; and transmit, to the NEF entity, a fourth message including at least one determined PDTQ policy and information related to the determined at least one PDTQ policy. The PDTQ policy may indicate at least one QoS policy which may be provided to a third party.

### [Advantageous Effects of Invention]

According to embodiments proposed in the disclosure, in case that a request of an external third party in a 5G system is a request for federated learning traffic or a request for traffic of a service which is not required to be provided in real time, a new QoS flow is always allocated, thereby minimizing the adverse influence (that is, reduced throughput, increased latency, and the like) of traffic for FL learning on application service traffic which is required to be transmitted in real time.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a 5G system architecture according to various embodiments of the disclosure.
FIG. 2 illustrates an example of processing QoS requests regarding multiple UEs, based on a new 5QI value, in a procedure in which an AF according to various embodiments of the disclosure transmits a QoS request to a 5G core network.
FIG. 3 illustrates a data transfer policy negotiation procedure according to various embodiments of the disclosure.
FIG. 4 illustrates a method for generating a PCC rule based on a data transfer policy according to various embodiments of the disclosure.
FIG. 5 illustrates a structure of a base station according to various embodiments of the disclosure.
FIG. 6 illustrates a structure of a UE according to various embodiments of the disclosure.

### [Mode for the Invention]

When a mobile communication UE application service provider (that is, application service provider (ASP)) operates services based on a machine learning model, the machine learning model may be trained based on collected data, thereby providing more improved services.

Meanwhile, in order to train the machine learning model, the ASP may utilize federated learning (FL) in which multiple UEs participate. That is, applications operating in respective UEs train the local model with collected local data, and transmit only the resulting local updates (that is, gradients) to the server. The server aggregates the local updates from the applications, trains a global model thereby, and again distributes the same to the applications. Meanwhile, it is necessary to separately allocate network resources for traffic for FL such that application service traffic that requires real-time transmission is not adversely affected (that is, decreased throughput, increased latency, and the like) by the traffic for FL. In addition, each application participating in FL may have a different learning speed (that is, the speed at which the learning result is transmitted to the server) according to the network situation of the UE that drives the application, and the entire learning speed of FL is determined by the member (that is, application or UE) having the lowest learning speed. Therefore, in case that network resources allocated to UEs participating in FL greatly differ from each other, there may occur a situation in which network resources of UEs having more resources allocated thereto may not be utilized.

The disclosure proposes method for allocating network resources in consideration of traffic for federated learning. Specifically, in a mobile communication system, an external ASP requests multiples UEs to configure QoS. In chase that the request is a request for federated learning traffic (or a request for traffic of a service which is not required to be provided in real time), the mobile communication system always allocates a new QoS flow when allocating resources for the request, thereby minimizing the influence on existing traffic (that is, real-time traffic).

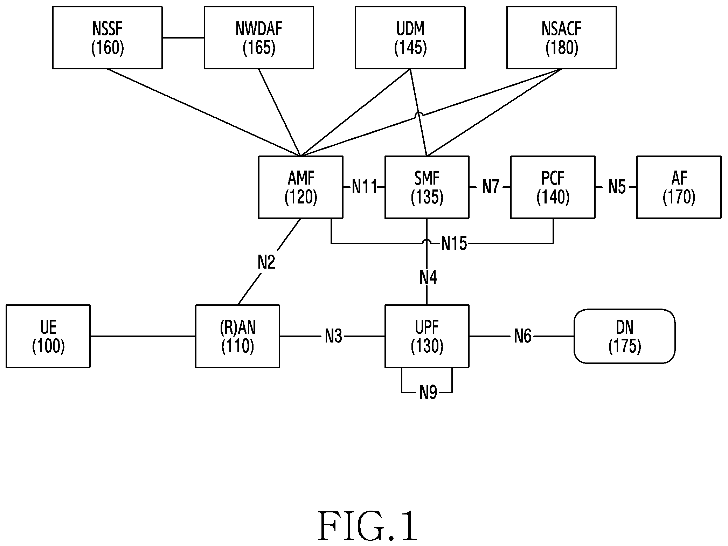

FIG. 1 illustrates a 5G system architecture according to various embodiments of the disclosure.

Referring to FIG. 1, a 5G mobile communication network may include a 5G user equipment (UE) (terminal) 100, a 5G radio access network (RAN, a base station, a 5g nodeB (gNB), an evolved node B (eNB), etc.) 110, and a 5G core network. The 5G core network may include network functions (NFs), such as an access and mobility management function (AMF) 120 that provides a mobility management function of the UE, a session management function (SMF) 135 that provides a session management function, a user plane function (UPF) 130 that performs a data transfer role, a policy control function (PCF) 140 that provides a policy control function, a unified data management (UDM) 145 that provides a function of managing data, such as subscriber data and policy control data, or a unified data repository (UDR) that stores data of various NFs such as the UDM.

In 3GPP systems, conceptual links connecting NFs in the 5G system are defined as reference points. In the following, examples of reference points included in the 5G system architecture described in FIG. 1 are provided below. However, they are not limited thereto.
- N1: a reference point between a UE and an AMF
- N2: a reference point between an (R)AN and an AMF
- N3: a reference point between an (R)AN and a UPF
- N4: a reference point between an SMF and a UPF
- N5: a reference point between a PCF and an AF
- N6: a reference point between a UPF and a DN
- N7: a reference point between an SMF and a PCF
- N8: a reference point between a UDM and an AMF
- N9: a reference point between two core UPFs
- N10: a reference point between a UDM and an SMF
- N11: a reference point between an AMF and an SMF
- N12: a reference point between an AMF and an AUSF
- N13: a reference point between a UDM and an authentication server function (AUSF)
- N14: a reference point between two AMFs
- N15: a reference point between a PCF and an AMF for a non-roaming scenario, and a reference point between a PCF and an AMF in a visited network for a roaming scenario

In the 5G system, network slicing refers to a structure and a technology enabling multiple independent logical networks virtualized in a single physical network. In order to satisfy specialized requirements of a service/application, a network operator provides a service by configuring a virtual end-to-end network referred to as a network slice. In this case, the network slice is distinguished by an identifier referred to as single-network slice selection assistance information (S-NSSAI). The network transmits a set of allowed slices (e.g., allowed NSSAI(s)) to a UE during a UE registration procedure, and the UE transmits and receives application data via a protocol data unit (PDU) session generated via one piece of S-NSSAI (i.e., network slice) in the set of allowed slices.

The mobile communication system is provided with identity information and quality of service (QoS) requirements of UEs capable of participating in federated learning from an external third-party server (application function (AF)), selects UEs to which network resources are allowable and allocates the network resources (i.e., QoS flow), based on the requirements, and transmits the result to the AF. Among the terms as used in the description of the disclosure, the term "aggregated QoS" may be used and interpreted to be synonymous with "same QoS", "identical QoS", and "group QoS". For example, "aggregated QoS request indicator" may be used and interpreted to be synonymous with "same QoS request indicator", "aggregated QoS information" may be used and interpreted to be synonymous with "same QoS information", and "aggregated QoS notification indicator" may be used and interpreted to be synonymous with "same QoS notification indicator".

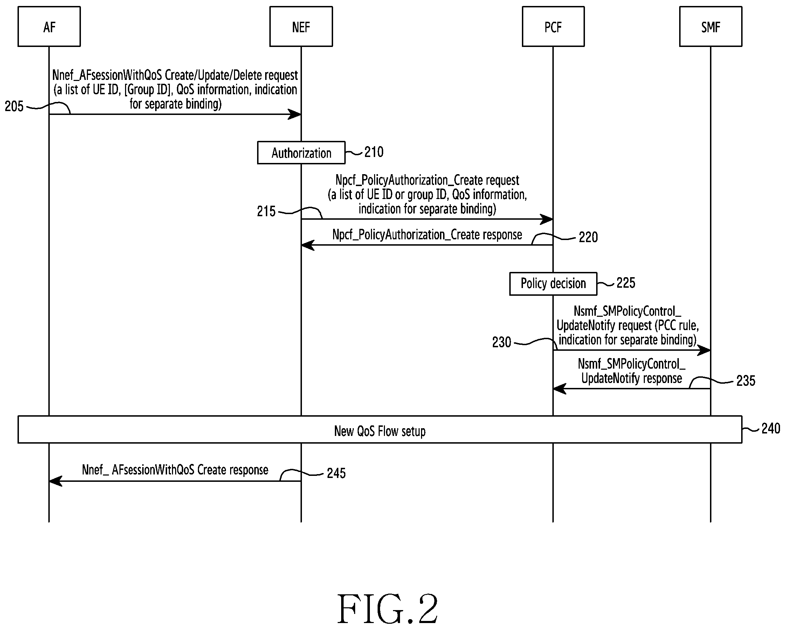

FIG. 2 illustrates an example of processing QoS requests regarding multiple UEs, based on a new 5QI value, in a procedure in which an AF according to various embodiments of the disclosure transmits a QoS request to a 5G core network.

Referring to FIG. 2, in step 205, the AF may transmit a message to the NEF so as to request generation/update/deletion of network resources (for example, QoS) for a specific service.

The message for requesting generation/update/deletion of network resources for a specific service may include the following information. However, the disclosure is not limited thereto.
- Flow description(s) or external application identifier: flow information regarding each service (for example, server IP address, server port number, protocol information, and the like) and an external application identifier regarding the service
- A list of UE addresses: a list configured by UE addresses (for example, IP address, MAC address, GPSI, external identity)
- Group ID: a group ID (external group ID or internal group ID) instead of a list of UE addresses. In the case of an update request for updating the mapping between a list of UE addresses and the Group ID, both information may be included simultaneously.
- AF identifier: AF identifier
- QoS parameter: indicates individual QoS parameters. Requested 5GS delay, requested priority, requested guaranteed bitrate, requested maximum bitrate. Additionally, a flow direction, a burst size, a burst arrival time at UE (uplink) or UPF (downlink), periodicity, time domain, and survival Time may be included.
- QoS reference: in case that individual QoS parameters are not included in the QoS requirement, a QoS reference that indicates predefined individual QoS parameters may be included.
- Indication for separate binding: an indicator for requesting that a new QoS flow be generated, instead of existing QoS flow(s), be generated with regard to QoS parameters and flow descriptions included in the request message.

In step 210, upon receiving a request message from the AF in step 205, the NEF may perform authorization regarding the request message of the NEF. In case that the number of UEs corresponding to the list of UE addresses in the AF request message or the number of UEs included in the alternative requirement is larger than a predefined number, the NEF may omit steps 215 and 220 and may transmit a message including an indicator that indicates request rejection, a cause value indicating that the rejection is because the number of UEs is exceeded, and the number of UEs allowable, to the AF in step 225.

In step 215, the NEF may store part or all of the information received from the AF in step 205 in a unified data repository (UDR). The NEF may perform a PCF discovery (discover PCFs) regarding a list of UE addresses received from the AF through a binding support function (BSF). The NEF may transmit a list of UE addresses or identifiers of UEs corresponding to a list of UE addresses or FL group IDs through a PCF discovery request message transmitted to the BSF. Upon receiving the message, the BSF may transmit information regarding a PCF and UE addresses handled by the PCF and/or identifiers of UEs to the NEF. The BSF may store the FL group ID, PCF ID, a list of addresses of UEs for each PCF.

In case that multiple PCFs are discovered, the NEF may generate a separate identifier (sub-FL group ID) regarding a list of addresses of UEs for each PCF and may store the same in the UDR as data associated with the FL group ID.

In case that multiple PCFs are discovered, the NEF may transmit a request message to each PCF, and the message may include only addresses regarding UEs handled by the corresponding PCF among a list of UE addresses received from the AF in step 205. The NEF may include the UE ID corresponding to the UE address with regard to each UE in the message transmitted to the PCF.

In addition to the above information, the NEF may transfer pieces of information included in the message received from the AF in step 205 to the PCF.

In case that the message received from the AF in step 205 has only a list of UE addresses and/or FL group ID, the NEF may transmit no message to the PCF, and may transmit a response message to the AF in step 225 to inform that an FL group has been generated.

According to an embodiment of the disclosure, the message that the NEF transmits to the PCF may be a Npcf_PolicyAuthorization_Create request message.

In step 220, the PCF may transmit a response message to the NEF.

In step 225, the PCF may identify PDU sessions, based on information included in the message received in step 215, with regard to all UEs corresponding to a list of UE addresses included in the message received in step 215. In addition, the PCF may generate a PCC rule with regard to each PDU session, based on the information included in the message received in step 215. In case that the message received in step 215 has an indication for separate binding, the PCF may generate the PCC rule so as to include "bind to separate QoS flow" (for example, an indicator that instructs binding of the PCC rule to a separate QoS flow). The PCC rule may not include "bind to separate QoS flow." In addition, information may be stored with regard to each QoS flow so as to indicate whether the QoS flow corresponds to separate binding.

In step 230, the PCF may include the following information in the message transmitted to the SMF. However, the disclosure is not limited thereto.
- SM policy association ID: indicates a policy-related identifier regarding a PDU session corresponding to the PCC rule determined in step 5.
- PCC rule: a service data flow (SDF) template (application ID, IP filter information, and the like), QoS parameters to be applied to SDF flows, ARP
- Bind to separate QoS flow: information that instructs binding of the PCC rule to a separate QoS Flow, and may be included in the PCC rule or as a separate parameter.

In step 235, the SMF may transmit a response message to the PCF.

In step 240, the SMF may perform binding regarding the PCC rule received in step 6 within the PDU session corresponding to the SM policy association ID in the message received from the PCF in step 230. In case that the message received in step 230 includes "bind to separate QoS Flow," the SMF may generate a new QoS flow, even if the same QoS flow as the parameters included in the PCC rule exists in the PDU session, instead of utilizing the QoS flow. Specifically, the SMF may include a QoS profile generated based on the corresponding PCC rule in a message transmitted to the base station (that is, radio access network (RAN)) and may include the generated QoS profile in a message transmitted to the UE.

In step 245, the NEF may transmit a response message to the AF message in response to the message for requesting generation/update/deletion of network resources for a specific service.

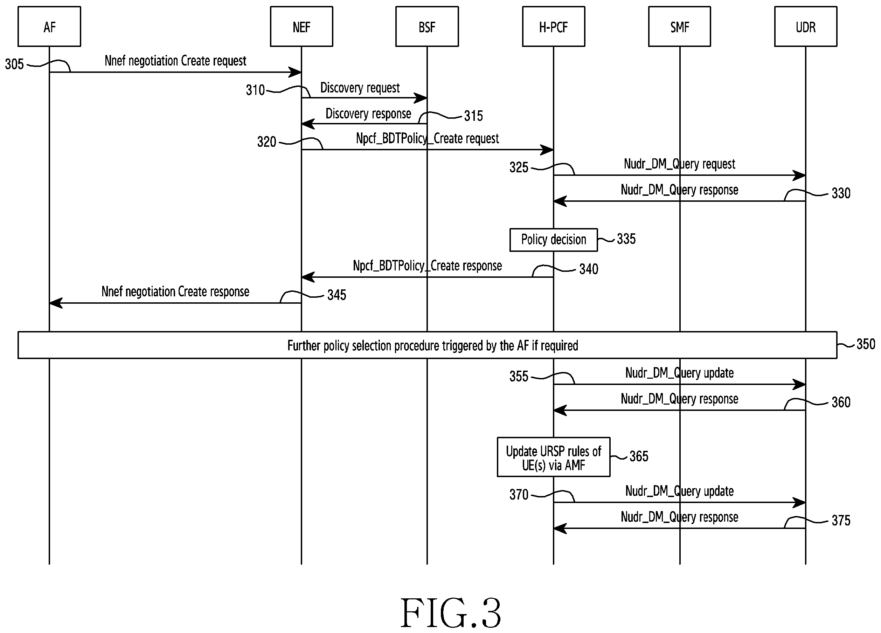

FIG. 3 illustrates a data transfer policy negotiation procedure according to various embodiments of the disclosure.

When an app operator wants to transmit application traffic to one or multiple UEs, he/she may perform the following procedure by using an AF in order to negotiate the policy of the traffic transmission. As the service operation used in each procedure, a service operation for a background data transfer policy may be used (for example, Nnef_BDTPNegotiation_Create/Update/Delete, Npcf_BDTPolilcy_Create/Update/Delete), or service operation defined for a planned data transfer policy including QoS information may be used (for example, Nnef_PDTQPolicyNegotiation_Create/Update/Delete, Npcf_PDTQPolicyNegotiation_Create/Update/Delete). In case that a service operation defined for a planned data transfer policy including QoS information is used, the AF may select multiple data transfer policies per reference ID in step 345, and multiple data transfer policies per reference ID may be stored in the UDR in steps 355 and 360.

In step 305, when the app operator wants to transmit application traffic to one or multiple UEs, he/she may perform the following procedure by using an AF in order to negotiate the policy of the traffic transmission. The procedure may be performed by using a Nnef_BDTPNegotiation_Create request used for background data transfer, or a separate message (for example, a message for application data transfer). The AF includes the following information in the message transmitted to the NEF for data transfer policy negotiation.
- ASP identifier: refers to the identifier of the application service provider (ASP).
- Number of UEs: refers to the number of UEs expected to transmit app traffic.
- Volume per UE: refers to the amount of data to be transmitted per UE.
- Desired time window: includes information regarding the time window during which app traffic is expected to be transmitted.
- External group identifier, internal group identifier, a list of UE IDs: refer to information used to identify UEs to which the data transfer policy is to be applied. An externally used group identifier, an internally used group identifier, or a list of UE identifiers may be used.
- Network area information: refers to information regarding the area in which data transmission is expected to occur. Geographical information may be included therein.
- Request for notification: a parameter for requesting the NEF to transmit a data transfer warning notification to the AF (for example, in case of discovering deterioration in data transfer performance, the AF is notified thereof).
- MAC address or IP 3-tuple of application server: refers to a MAC address (for example, Ethernet MAC address) to be used to identify the application server or IP information (for example, the server's IP address, port number, protocol information).
- Separate QoS flow indication: during data transfer, this parameter is used to request the use of a separate QoS flow for the data transfer. For example, in the case of traffic for federated learning, a separate QoS flow for the traffic may be generated and used (that is, the QoS flow is not shared with other application traffic).
- QoS related information: refers to QoS information required for data transfer and the like. The minimum bitrate, the bitrate difference between QoS flows, the maximum delay, and the like may be included therein.
- QoS reference ID: may include a value or information indicating standardized 5QI or pre-defined 5QI (that is, a 5QI value indicating specific QoS characteristics pre-stored in the RAN).

In case that the message received in step 305 includes an external group identifier, the NEF may request the UDM to convert the same, thereby acquiring an internal group identifier corresponding to the external group identifier.

In step 310, in case that the message received in step 305 includes a list of UE IDs, an external group identifier, or an internal group identifier, the NEF may include a list of UE IDs, an external group identifier, or an internal group identifier in the PCF discovery request message transmitted to the BSF. Alternatively, the NEF may acquire the corresponding PCF address through configuration information.

In step 315, the BSF may include the address of the PCF(s) corresponding to the information included in the message received in step 310 in the message transmitted to the NEF.

In case that the message received in step 310 includes a list of UE IDs, the BSF may include the address of PCF(s) that handles the UEs included in the list.

In addition, in case that the message received in step 310 includes an external group identifier, the BSF includes the address of the PCF(s) that handle the external group identifier therein. In case that the message received in step 310 includes an internal group identifier (for example, the internal group identifier acquired in step 310), the address (for example, fully qualified domain name) (FQDN) or the like) of the PCF(s) that handle internal group identifier may be included therein.

In step 320, the NEF may include the following in a message transmitted to each PCF with regard to some or all of the addresses regarding the PCF(s) obtained in step 315. However, the disclosure is not limited thereto.
- ASP identifier: refers to the identifier of the application service provider (ASP).
- Number of UEs: refers to the number of UEs expected to transmit app traffic.
- Volume per UE: refers to the amount of data to be transmitted per UE.
- Desired time window: includes information regarding the time window during which app traffic is expected to be transmitted.
- External group identifier, internal group identifier, a list of UE IDs: refer to information used to identify UEs to which the data transfer policy is to be applied. An externally used group identifier, an internally used group identifier, or a list of UE identifiers may be used.
- Network area information: includes a list of cell IDs or a list configured by TA IDs. In case that the message received in step 305 includes geographical information, the NEF converts the same into a corresponding list of cell IDs or list configured by TA IDs.
- Request for notification: a parameter for requesting the NEF to transmit a data transfer warning notification to the AF (for example, in case of discovering deterioration in data transfer performance, the AF is notified thereof).
- MAC address or IP 3-tuple of application server: refers to a MAC address (for example, Ethernet MAC address) to be used to identify the application server or IP information (for example, the server's IP address, port number, protocol information).
- Separate QoS flow indication: during data transfer, this parameter is used to request the use of a separate QoS flow for the data transfer. For example, in the case of traffic for federated learning, a separate QoS flow for the traffic may be generated and used (that is, the QoS flow is not shared with other application traffic).
- QoS related information: refers to QoS information required for data transfer and the like. The minimum bitrate, the bitrate difference between QoS flows, the maximum delay, and the like may be included therein.
- QoS reference ID: may include a value or information indicating standardized 5QI or pre-defined 5QI (that is, a 5QI value indicating specific QoS characteristics pre-stored in the RAN).

In step 325, the H-PCF may include the following information in the message transmitted to the UDR. However, the disclosure is not limited thereto.
- Policy data
- Background data transfer

In step 330, in case that the message received in step 325 includes policy data and background data transfer, the UDR may include data transfer policies regarding all ASPs in the response message transmitted to the H-PCF.

In step 335, the H-PCF may determine one or multiple data transfer policies, based on the information contained in the message received in step 320 (that is, information transmitted from the AF) and the information received in step 330. In addition, the H-PCF determines policy reference IDs indicating one or multiple data transfer policies. The data transfer policy and policy reference ID may be related to background data transfer or application data transfer.

The data transfer policy may include the following information. However, the disclosure is not limited thereto.
- A recommended time window for the data transfer, a reference to a charging rate for this time window,
- Separate QoS Flow indication: during transferring data, this parameter is used to request the use of a separate QoS flow for the data transfer. This parameter may be included in case that the message received in step 320 includes the same.
- QoS related information: refers to QoS information required for data transfer and the like.
- QoS reference ID: may include a value or information indicating standardized 5QI or pre-defined 5QI (that is, a 5QI value indicating specific QoS characteristics pre-stored in the RAN).

In step 340, the H-PCF may include the policy reference ID determined in step 335 and the corresponding data transfer policy in the response message transmitted to the NEF. One or more data transfer policies may be included therein.

In step 345, the NEF may include the policy reference ID and one or more data transfer policies included in the message received in step 340.

In case that the message received by the NEF in step 340 includes the policy reference ID and one data transfer policy, step 350 may be omitted, and step 355 may be performed.

In case that the AF has received multiple data transfer policies in step 345, the AF may select a data transfer policy and then include the reference ID and the selected data transfer policy in the message transmitted to the NEF in step 350. The NEF may include the reference ID and the selected data transfer policy included in the message received from AF in the message transmitted to the H-PCF(s). The H-PCF transmits a response message to NEF, and the NEF transmits a response message to AF.

In step 355, the H-PCF may store the data transfer reference ID and data transfer policy internally or in the UDR. H-PCF may include the following in the message transmitted to the UDR. However, the disclosure is not limited thereto.
- Reference ID: an identifier that identifies the connection to the AF in relation to data transfer policy negotiation. This identifier is identical to the reference ID in step 335.
- Data set: may be configured to be a value indicating policy data.
- Data subset: configured to be a value indicating background data transfer data or a value indicating planned data transfer with QoS requirement policy.
- Data transfer policy: refers to the data transfer policy determined in step 335 or the data transfer policy selected by AF in step 350 among the data transfer policies determined in step 335.

In step 360, the UDR stores the data transfer policy received in step 355 in the internal repository corresponding to the reference ID, data set, and data subset received in step 355. The UDR may transmit send a response message to the H-PCF.

In step 365, the H-PCF may update the URSP rule, based on the determined data transfer policy. With regard to UE(s) corresponding to the data transfer policy, the PCF may include the URSP rule that has been updated with regard to each UE in a UE policy container and may transmit the same to the serving AMF regarding the UE. The serving AMF may include the UE policy container in the UE configuration update request message transmitted to the UE.

In step 370, the H-PCF may add the reference ID to the PDU session related policy data stored in the UDR. The H-PCF may include the following information in the message transmitted to UDR. However, the disclosure is not limited thereto.
- Data set: configured to be a value indicating policy data.
- Data subset: configured to be a value indicating PDU Session policy control data.
- Key: includes UE identifier information (for example, SUPI). The H-PCF may identify relevant UEs, based on the information included in the data transfer policy, and when updating PDU session policy control data with regard to each UE, may include corresponding UE identifier information therein.
- Sub key: includes S-NSSAI (that is, slice identifier information) and DNN (that is, data network name information). The H-PCF may include S-NSSAI and DNN corresponding to the ASP ID included in the data transfer policy therein.
- Reference ID: refers to an identifier indicating data transfer policy.

In step 375, the UDR may transmit a response message to the message received in step 370 to the H-PCF.

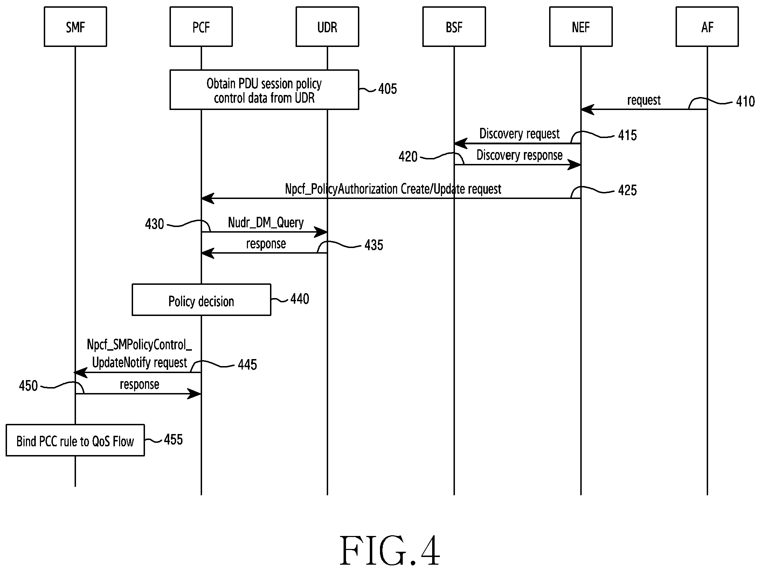

FIG. 4 illustrates a method for generating a PCC rule based on a data transfer policy according to various embodiments of the disclosure.

Referring to FIG. 4, in step 405, the PCF may acquire PDU session policy control data stored in the UDR.

In case that a change occurs to the PDU session policy control data, the UDR may include the PDU session policy control data in a Nudr_DM_Notify message transmitted to the PCF that handles the corresponding session.

Upon receiving a Nudr_DM_Query message from the PCF, the UDR may include PDU session policy control data corresponding to S-NSSAI, DNN, and SUPI included in the received message in a response message transmitted to the PCF.

In step 410, in case that the AF wants to apply a data transfer policy to an already established PDU session, the AF may include the following information in a message transmitted to the NEF. However, the disclosure is not limited thereto.
- Reference ID: includes an identifier regarding the data transfer policy to be applied.
- AF session information: includes information to be used to identify the AF session. ASP ID (or S-NSSAI and DNN)
- Group of UE information: may include a list of UE IDs or group ID (external group ID or internal group ID).

In step 415, the NEF may acquire S-NSSAI and DNN, based on the ASP ID included in step 410.

In case that a group ID is included in step 410, the NEF may acquire a list of UE IDs corresponding to the group ID.

The NEF transmits a message to BSF to request information regarding PCFs, and the message includes the following information. However, the disclosure is not limited thereto.
- In case that the BSF supports PCF discovery regarding multiple UEs, a list of UE IDs/group ID is included.
- In case that the BSF does not support PCF discovery regarding multiple UEs, the UE ID is included. In this case, steps 415 and 420 may be repeated as many times as the number of UEs.

In step 420, in case that the message received in step 415 includes a list of UE IDs or a group ID, the BSF may include the UE-specific serving PCF address with regard to all corresponding UEs, in a response message transmitted to the NEF.

In case that the message received in step 415 includes one UE ID, the BSF may include the serving PCF address regarding the corresponding UE in the response message transmitted to the NEF.

In step 425, the NEF may have PCF address information and information regarding a list of UEs corresponding to each PCF address, based on information included in the message received in step 420.

The NEF may include the following information in the message transmitted to PCF. However, the disclosure is not limited thereto.
- S-NSSAI, DNN, UE ID, reference ID

In step 430, in case that the UDR has acquired the reference ID in step 405, or in case that the message received in step 425 includes the reference ID, a query message may be transmitted to the UDR in order to acquire the corresponding data transfer policy. The message includes the reference ID and may include information indicating DataSet and Data Subset corresponding to policy data and data transfer policy (for example, background data transfer policy or planned data transfer policy with QoS requirement).

In step 435, in case that the message received in step 430 includes the reference ID, the UDR may include the corresponding data transfer policy information in the response message transmitted to the PCF. The data transfer policy may include the following information. However, the disclosure is not limited thereto.
- ASP identifier: refers to the identifier of the application service provider (ASP).
- Number of UEs: refers to the number of UEs expected to transmit app traffic.
- Volume per UE: refers to the amount of data to be transmitted per UE.
- Desired time window: includes information regarding the time window during which app traffic is expected to be transmitted.
- External group identifier, internal group identifier, a list of UE IDs: refer to information used to identify UEs to which the data transfer policy will be applied. An externally used group identifier, an internally used group identifier, or a list of terminal identifiers may be used.
- Network area information: refers to information regarding the area in which data transmission is expected to occur. Geographical information may be included therein.
- Request for notification: a parameter for requesting the NEF to transmit a data transfer warning notification to the AF (for example, in case that deterioration in data transfer performance is discovered, the AF is notified thereof).
- MAC address or IP 3-tuple of application server: refers to a MAC address (for example, Ethernet MAC address) to be used to identify the application server, or IP information (for example, the server's IP address, port number, protocol information).
- Separate QoS flow indication: during data transfer, this parameter is used to request the use of a separate QoS flow for the data transfer. For example, in the case of traffic for federated learning, a separate QoS flow for the traffic may be generated and used (that is, the QoS flow is not shared with other application traffic).
- QoS related information: refers to QoS information required for data transfer and the like. The minimum bitrate, the bitrate difference between QoS flows, the maximum delay, and the like may be included therein.
- QoS reference ID: may include a value or information indicating standardized 5QI or pre-defined 5QI (that is, a 5QI value indicating specific QoS characteristics pre-stored in the RAN).

In step 440, the PCF may generate a new PCC rule, based on the information included in the data transfer policy received in step 435, or update the existing PCC rule.

The PCF may generate A service description filter (SDF) based on the MAC address or IP 3-tuple of application server included in the data transfer policy.

In case that the data transfer policy includes a separate binding indication, or in case that the 5QI in the PCC rule indicates a specific value, the PCF may determine to instruct binding of the corresponding PCC rule to a separate QoS flow. The indicator may be included in the PCC rule or may be included in the message transmitted to the SMF as a separate parameter in step 445.

The message transmitted by the PCR to the SMF may include the following information:
SM Policy association ID, PCC rule, separate binding indication

In step 450, the SMF may transmit a response message to the PCF.

In step 455, the SMF may perform binding regarding the PCC rule received in step 445 within the PDU session corresponding to the SM policy association ID in the message received from the PCF in step 445. In case that the message received in step 445 includes a separate binding indication, the SMF may generate a new QoS flow, even if the same QoS flow as the parameters included in the PCC rule exists in the PDU session, instead of utilizing the QoS flow. Specifically, the SMF may include a QoS profile generated based on the corresponding PCC rule in a message transmitted to the base station (that is, radio access network (RAN)) and may include the generated QoS profile in a message transmitted to the UE.

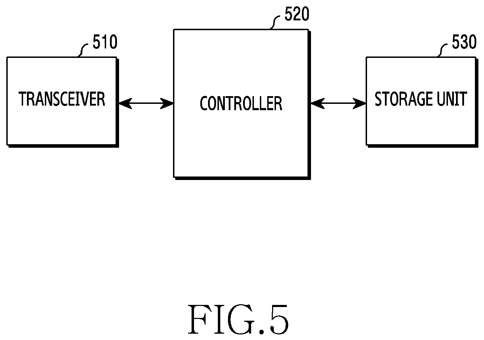

FIG. 5 illustrates a structure of a base station according to various embodiments of the disclosure.

Referring to FIG. 5, the base station may include a transceiver 510, a controller 520, and a storage 530. The transceiver 510, the controller 520, and the storage 530 may be operated according to the above-described communication methods of the base station. A network device may also correspond to the structure of the base station. However, components of the base station are not limited to the above-described example. For example, the base station may include a larger or smaller number of components than the above-described components. For example, the base station may include the transceiver 510 and the controller 520. Furthermore, the transceiver 510, the controller 520, and the storage 530 may be implemented in the form of a single chip.

The transceiver 510 refers to a base station receiver and a base station transmitter as a whole, and may transmit/receive signals with UEs, other base stations, and other network devices. The transmitted/received signals may include control information and data. The transceiver 510 may transmit, for example, system information, synchronization signals, or reference signals to UEs. To this end, the transceiver 510 may include an RF transmitter configured to up-convert and amplify the frequency of transmitted signals, an RF receiver configured to low-noise-amplify received signals and down-convert the frequency thereof, and the like. However, this is only an embodiment of the transceiver 510, and the components of the transceiver 510 are not limited to the RF transmitter and the RF receiver. The transceiver 510 may include wired/wireless transceivers, and may include various components for transmitting/receiving signals. In addition, the transceiver 510 may receive signals through a communication channel (e.g., a radio channel), output the same to the controller 520, and transmit signals output from the controller 520 through the communication channel. Furthermore, the transceiver 510 may receive communication signals, output same to a processor, and transmit signals output from the processor to UEs, other base stations, or other network entities through a wired/wireless network.

The storage 530 may store programs and data necessary for operations of the base station. In addition, the storage 530 may store control information or data included in signals acquired by the base station. The storage 530 may include storage media such as a ROM, a RAM, a hard disk, a CD-ROM, and a DVD, or a combination of storage media. In addition, the storage 530 may store at least one of information transmitted/received through the transceiver 510 and information generated through the controller 520.

As used herein, the controller 520 may be defined as a circuit, an application specific integrated circuit, or at least one processor. The processor may include a communication processor (CP) which performs control for communication and an application processor (AP) which controls upper layers such as application programs. The controller 520 may control the overall operation of the base station according to the embodiments proposed in the disclosure. For example, the controller 520 may control signal flows between the respective blocks to perform operations according to the above-described flowcharts.

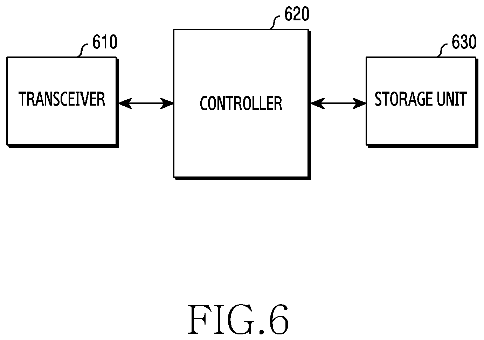

FIG. 6 illustrates a structure of a UE according to various embodiments of the disclosure.

Referring to FIG. 6, the UE may include a transceiver 610, a controller 620, and a storage 630. The transceiver 610, the controller 620, and the storage 630 may be operated according to the above-described communication methods of the UE. Components of the UE are not limited to the above-described example. For example, the UE may include a larger or smaller number of components than the above-described components. For example, the UE may include the transceiver 610 and the controller 620. Furthermore, the transceiver 610, the controller 620, and the storage 630 may be implemented in the form of a single chip.

The transceiver 610 refers to a UE receiver and a UE transmitter as a whole, and may transmit/receive signals with base stations, other UEs, and other network entities. The signals transmitted/received with the base station may include control information and data. The transceiver 610 may receive, for example, system information, synchronization signals, or reference signals from the base station. To this end, the transceiver 610 may include an RF transmitter configured to up-convert and amplify the frequency of transmitted signals, an RF receiver configured to low-noise-amplify received signals and down-convert the frequency thereof, and the like. However, this is only an embodiment of the transceiver 610, and the components of the transceiver 610 are not limited to the RF transmitter and the RF receiver. Also, the transceiver 610 may include wired/wireless transceivers, and may include various components for transmitting/receiving signals. In addition, the transceiver 610 may receive signals through a radio channel, output the same to the controller 620, and transmit signals output from the controller 620 through the radio channel. Furthermore, the transceiver 610 may receive communication signals, output same to a processor, and transmit signals output from the processor to network entities through a wired/wireless network.

The storage 630 may store programs and data necessary for operations of the UE. In addition, the storage 630 may store control information or data included in signals acquired by the UE. The storage 630 may include storage media such as a ROM, a RAM, a hard disk, a CD-ROM, and a DVD, or a combination of storage media.

As used herein, the controller 620 may be defined as a circuit, an application specific integrated circuit, or at least one processor. The processor may include a communication processor (CP) which performs control for communication and an application processor (AP) which controls upper layers such as application programs. The controller 620 may control the overall operation of the UE according to the embodiments proposed in the disclosure. For example, the controller 620 may control signal flows between the respective blocks to perform operations according to the above-described flowcharts.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a network exposure function (NEF) entity in a wireless communication system, the method comprising:
receiving, from an application function (AF) entity, a first message requesting negotiation of a planned data transfer with QoS (PDTQ) policy;
transmitting, to a policy control function (PCF) entity, a second message requesting identification of the PDTQ policy, based on the first message;
receiving, from the PCF entity, a third message comprising information related to at least one PDTQ policy identified by the PCF entity; and
transmitting, to the AF entity, the information related to the at least one identified PDTQ policy.

2. The method of claim 1, further comprising:
receiving, from the AF entity, a fourth message comprising one PDTQ policy selected by the AF entity and a PDTQ policy reference ID; and
transmitting, to the PCF entity, the selected one PDTQ policy,
wherein the first message comprises information requesting negotiation of the PDTQ policy, and
wherein the information requesting negotiation of the PDTQ policy comprises at least one of a separate QoS flow indication, a QoS reference ID, and QoS related information.

3. The method of claim 1, wherein the information related to the at least one PDTQ policy comprises a policy reference ID regarding each of the at least one PDTQ policy identified by the PCF entity, and information regarding a recommended time of use of the PDTQ policy.

4. The method of claim 1, wherein the PDTQ policy selected by the AF entity and the PDTQ policy reference ID are stored by the PCF entity, or are transferred from the PDF entity to a unified data repository (UDR) entity and stored therein.

5. A method performed by a policy control function (PCF) entity in a wireless communication system, the method comprising:
receiving, from a network exposure function (NEF) entity, a first message requesting identification of a planned data transfer with QoS (PDTQ) policy according to a request of an application function (AF) entity;
transmitting, to a unified data repository (UDR) entity, a second message requesting a pre-stored PDTQ policy and information for identifying a PDTQ policy of the AF entity;
receiving, from the UDR entity, a third message comprising the pre-stored PDTQ policy and the information for identifying a PDTQ policy of the AF entity;
identifying at least one PDTQ policy, based on the third message; and
transmitting, to the NEF entity, a fourth message comprising the at least one identified PDTQ policy and information related to the identified at least one PDTQ policy,
wherein the PDTQ policy indicates at least one QoS policy which can be provided to a third party.

6. The method of claim 5, further comprising:
receiving, from the AF entity through the NEF entity, a fifth message comprising one PDTQ policy selected by the AF entity and a PDTQ policy reference ID;
storing one PDTQ policy selected by the AF entity and the PDTQ policy reference ID, based on the fifth message; and
transmitting, to the UDR entity, a sixth message comprising one PDTQ policy selected by the AF entity and the PDTQ policy reference ID.

7. The method of claim 5, wherein the first message comprises information requesting negotiation of the PDTQ policy, and
wherein the information requesting negotiation of the PDTQ policy comprises at least one of a separate QoS flow indication, a QoS reference ID, and QoS related information.

8. The method of claim 5, wherein the information related to at least one PDTQ policy comprises a policy reference ID regarding each of at least one PDTQ policy identified by the PCF entity, and information regarding a recommended time of use of the PDTQ policy.

9. A network exposure function (NEF) entity in a wireless communication system, the NEF entity comprising:
at least one transceiver; and
a controller coupled to the at least one transceiver,
wherein the controller is configured to:
receive, from an application function (AF) entity, a first message requesting negotiation of a planned data transfer with QoS (PDTQ) policy;
transmit, to a policy control function (PCF) entity, a second message requesting identification of the PDTQ policy, based on the first message;
receive, from the PCF entity, a third message comprising information related to at least one PDTQ policy identified by the PCF entity; and
transmit, to the AF entity, the information related to the at least one identified PDTQ policy.

10. The UPF entity of claim 9, wherein the controller is further configured to:
receive, from the AF entity, a fourth message comprising one PDTQ policy selected by the AF entity and a PDTQ policy reference ID; and
transmit, to the PCF entity, the selected one PDTQ policy,
wherein the first message comprises information requesting negotiation of the PDTQ policy, and
wherein the information requesting negotiation of the PDTQ policy comprises at least one of a separate QoS flow indication, a QoS reference ID, and QoS related information.

11. The UPF entity of claim 9, wherein the information related to the at least one PDTQ policy comprises a policy reference ID regarding each of at least one PDTQ policy identified by the PCF entity, and information regarding a recommended time of use of the PDTQ policy.

12. The UPF entity of claim 9, wherein the PDTQ policy selected by the AF entity and the PDTQ policy reference ID are stored by the PCF entity, or are transferred from the PDF entity to the UPF entity and stored therein.

13. A policy control function (PCF) entity in a wireless communication system, the PCF entity comprising:
at least one transceiver; and
a controller coupled to the at least one transceiver,
wherein the controller is configured to:
receive, from a network exposure function (NEF) entity, a first message requesting identification of a planned data transfer with QoS (PDTQ) policy according to a request of an application function (AF) entity;
transmit, to a unified data repository (UDR) entity, a second message requesting a pre-stored PDTQ policy and information for identifying a PDTQ policy of the AF entity;
receive, from the UDR entity, a third message comprising the pre-stored PDTQ policy and information for identifying a PDTQ policy of the AF entity;
identify at least one PDTQ policy, based on the third message; and
transmit, to the NEF entity, a fourth message comprising the at least one identified PDTQ policy and information related to the identified at least one PDTQ policy,
wherein the PDTQ policy indicates at least one QoS policy which may be provided to a third party.

14. The PCF entity of claim 13, wherein the controller is further configured to:
receive, from the AF entity through the NEF entity, a fifth message comprising one PDTQ policy selected by the AF entity and a PDTQ policy reference ID;
store one PDTQ policy selected by the AF entity and the PDTQ policy reference ID, based on the fifth message; and
transmit, to the UDR entity, a sixth message comprising one PDTQ policy selected by the AF entity and the PDTQ policy reference ID.

15. The method of claim 13, wherein the first message comprises information requesting negotiation of the PDTQ policy,
wherein the information requesting negotiation of the PDTQ policy comprises at least one of a separate QoS flow indication, a QoS reference ID, and QoS related information, and
wherein the information related to the at least one PDTQ policy comprises a policy reference ID regarding each of at least one PDTQ policy identified by the PCF entity, and information regarding a recommended time of use of the PDTQ policy.
